Europäisches Patentamt

European Patent Office

Office européen des brevets

(11) Publication number: **0 252 526 B1**

## EUROPEAN PATENT SPECIFICATION

(45) Date of publication of patent specification: **08.05.91** (51) Int. Cl.5: **C08F 220/12**

(21) Application number: **87110025.1**

(22) Date of filing: **10.07.87**

(54) **Polyacrylate dispersions prepared with a water-soluble conjugated unsaturated monomer in the absence of a protective colloid.**

(30) Priority: **11.07.86 US 884822**

(43) Date of publication of application:
**13.01.88 Bulletin 88/02**

(45) Publication of the grant of the patent:
**08.05.91 Bulletin 91/19**

(84) Designated Contracting States:
**CH DE FR GB IT LI NL**

(56) References cited:
**EP-A- 213 895**
**US-A- 2 129 478**

(73) Proprietor: **HERCULES INCORPORATED**
**Hercules Plaza**
**Wilmington Delaware 19894(US)**

(72) Inventor: **Craig, Daniel Horace**
**502 Cobblers Lane**
**Hockessin, DE 19707(US)**

(74) Representative: **Lederer, Franz, Dr. et al**
**Lederer, Keller & Riederer Patentanwälte**
**Lucile-Grahn-Strasse 22**
**W-8000 München 80(DE)**

## Description

This invention relates to processes for preparing acrylic polymer latices by the aqueous emulsion polymerization of acrylic or a methacrylic esters.

United Kingdom Patent Specification 1,278,813 indicates that it is known that stable latices can be obtained by the emulsion polymerization of acrylic or a methacrylic esters in the presence of over 25% of vinyl acetate and a protective colloid such as hydroxyethyl-cellulose (HEC) However, when less than 25% of the vinyl acetate comonomer is used, a stable latex cannot be obtained if the protective colloid is present.

Further, it is known, for instance from U.S. Patent 4,265,796, that the presence of protective colloids during the emulsion polymerization of acrylic esters frequently results in coagulated dispersions or in extremely viscous dispersions which are unsuitable for use as paint binders.

The use of protective colloids has been avoided by using high levels of surfactants, e.g., about 5% to about 10%, based on the monomer, in place of the protective colloid. However, the properties of the resultant latex, such as its film-forming ability, tensile strength, film-blocking resistance and water and solvent resistance are adversely affected.

British Patent Specification 787,703 discloses a process for preparing acrylic latices by emulsion polymerization of acrylic and methacrylic esters in the presence of water-soluble conjugated unsaturated monomers and initiators. The need for a protective colloid is avoided by the formation of an aqueous latex from an interpolymer formed from an alkyl ester of acrylic or methacrylic acid, acrylonitrile and/or methacrylonitrile, acrylic acid or a monomethyl or monophenyl acrylic acid, and a monovinylidene aromatic hydrocarbon or a nuclear halogen substitution product thereof, the disclosed process being extremely complex and subject to many specific and critical procedural restrictions.

EP-A 213895 (published after the present priority date) discloses a process for preparing an acrylic polymer latex by the aqueous emulsion polymerization of an acrylic ester in the presence of a protective colloid and of a water-soluble conjugated unsaturated monomer.

There is a need for a simple and effective process for the emulsion polymerization of acrylic and methacrylic esters in the absence of a protective colloid, and that does not require the presence of high surfactant levels.

According to the invention, a process for preparing an acrylic polymer latex or dispersion by the aqueous emulsion polymerization of an acrylic or methacrylic ester containing up to 22 carbon atoms, in the absence of a protective colloid and in the presence of a polymerization initiator, is characterized in that the polymerization is carried out in the presence of from 0.1% to 2%, by weight of the total monomer, of a water-soluble monomer having conjugated unsaturation, having a solubility of at least 0.4 gram per 100 ml of water at 20° C, and selected from the group consisting of furoic acid, metal salts, amine salts, ammonium salts and quaternary salts of rosin and of $C_5$ to $C_{36}$ carboxylic acids, and water-soluble amine salts, amides, substituted amides, hydroxyalkyl esters, sulfoalkyl esters, aldehydes, and alcohols of the said monomer.

The resultant polyacrylate latices are shear-stable, have low viscosity and good flow behavior. The total grit level (including coagulum) is low, 1.0% to 2%, typically about 1%. The particle size is from 0.05 microns up to 0.5 microns, typically from 0.05 microns up to 0.3 microns.

The water-soluble monomers having conjugated unsaturation, of which the water-soluble amine salts, amides, substituted amides, hydroxyalkyl esters, sulfoalkyl esters, aldehydes, and alcohols may be used to provide stable latices according to the invention, include sorbic acid, cinnamic acid, abietic acid, furoic acid, linoleic acid, furylacrylic acid and muconic acid.

Only substantially completely water-soluble monomers possessing conjugated unsaturation are useful in the practice of this invention. Water-insoluble conjugated monomers, such as hexadiene, butadiene, isoprene, sorbic acid, cinnamic acid, abietic acid, vinyl benzoic acid, linoleic acid and muconic acid provide coagulated dispersions or dispersions possessing little, if any, mechanical stability.

The term "water-soluble monomer" as used herein means a monomer that preferably has a solubility of at least 1.0 grams per 100 ml of water at 20° C.

The term "conjugated unsaturation" means any two double or triple carbon-carbon bonds connected by one single carbon-carbon bond.

Preferably, the water-soluble monomer has 5 to 24 carbon atoms, and more preferably has 5 to 18 carbon atoms.

Suitable metals for forming the metal salts include sodium, potassium, lithium, magnesium, calcium and zinc.

Although the amount of the water-soluble monomer having conjugated unsaturation used will vary depending on the desired viscosity, particle size and latex properties, generally from 0.1 to 2%, by weight of the total monomer content, is employed, preferably from 0.5% to 1%.

These conjugated monomers are readily copolymerizable with acrylic esters and methacrylic esters. The resultant polyacrylate dispersions impart significant improvement to the gloss and wet-abrasion resistance of latex paints formulated with them.

Preferably, the acrylic esters and methacrylic esters used to make latices that are improved by the process according to the invention are those in which the alkyl group contains up to 9 carbon atoms, and most preferably are methyl acrylate, methyl methacrylate, ethyl acrylate, ethyl methacrylate, isopropyl acrylate, isopropyl methacrylate, n-butyl acrylate, n-butyl methacrylate, isobutyl acrylate, isobutyl methacrylate, 2-ethylhexyl acrylate, 2-ethylhexyl methacrylate, t-butyl acrylate, t-butyl methacrylate, 3,3-dimethylbutyl acrylate and 3,3-dimethyl butyl methacrylate.

Other alkyl esters of acrylic and methacrylic acid that can be used, containing up to 22 carbon atoms, include decyl acrylate, decyl methacrylate, hendecanyl methacrylate, lauryl methacrylate, tridecanyl methacrylate, myristyl acrylate, myristyl methacrylate, pentadecanyl methacrylate, arachidyl methacrylate, behenyl methacrylate, 10-methyl hendecanyl methacrylate and 2-ethyl-lauryl methacrylate.

The alkyl esters of acrylic and methacrylic acid that are suitable for the process according to the invention can be polymerized with each other, and can be copolymerized with one or more different monomers capable of addition type polymerization, including unsubstituted and substituted styrene, acrylic or methacrylic acid, vinyl and vinylidene halides, allyl esters of saturated monocarboxylic acids, vinyl esters, vinyl ethers, dialkyl esters of monoethylenically unsaturated dicarboxylic acids, ethylenically unsaturated monocarboxylic and polycarboxylic acids and the anhydrides, nitriles, unsubstitured and substituted (including N-substituted) amides of all the said acids.

Typically, the comonomer is present in an amount from 0.5% to less than 50%, by weight of the total monomer content, preferably from 0.5% to 25%, most preferably from 1% to 10%.

The vinyl esters with which the acrylates and methacrylates used in the process according to the invention can be copolymerized include aliphatic vinyl esters, such as vinyl formate, vinyl acetate, vinyl propionate, vinyl butyrate, vinyl isobutyrate, vinyl valerate, and vinyl caproate, and the allyl esters of saturated monocarboxylic acids include allyl acetate, allyl propionate and allyl lactate. Generally, these monomers are used in amounts ranging up to 10% of the weight of monomers used. The allyl esters of saturated monocarboxylic acids are generally used in relatively small amounts together with larger amounts of one or more different vinyl monomers, particularly with aliphatic vinyl esters such as vinyl acetate.

The vinyl ethers with which the acrylates and methacrylates used in the process according to the invention can be copolymerized include methylvinyl ether, ethylvinyl ether and n-butylvinyl ether and typical vinyl ketones include methylvinyl ketone, ethylvinyl ketone and iso-butylvinyl ketone. The suitable dialkyl esters of monoethylenically unsaturated dicarboxylic acids include diethyl maleate, dibutyl maleate, dioctyl maleate, diisooctyl maleate, dinonyl maleate, diisodecyl maleate, ditridecyl maleate, dipropyl fumarate, dibutyl fumarate, dioctyl fumarate, diisooctyl fumarate, didecyl fumarate, dibutyl itaconate and dioctyl itaconate.

The monoethylenically unsaturated monocarboxylic acids that are suitable for use as comonomers include acrylic acid, methacrylic acid, ethacrylic acid and crotonic acid; monoethylenically unsaturated dicarboxylic acids, such as maleic acid, fumaric acid, itaconic acid and citraconic acid; and monoethylenically unsaturated tricarboxylic acids, such as aconitic acid and the halogen-substituted derivatives, e.g., alpha-chloroacrylic acid, and anhydrides of these acids, such as, e.g., maleic anhydride and citraconic anhydride.

Acrylonitrile, alpha-chloro-acrylonitrile and methacrylonitrile are among the corresponding nitriles of such acids that can be used as comonomers. Suitable amides of such acids include unsubstituted amides such as acrylamide, methacrylamide and other alpha-substituted acrylamides and N-substituted amides obtained by conventional reaction of the amides of the aforementioned mono- and poly-carboxylic acids with an aldehyde, such as formaldehyde. Suitable N-substituted amides include N-methylolacrylamide, N-methylolmethacrylamide, alkylated N-methylolacrylamides and N-methylolmethacrylamides, such as N-methoxymethylacrylamide and N-methoxymethyl-methacrylamide.

Amino monomers that can be used as comonomers include substituted and unsubstituted aminoalkyl acrylates, hydrochloride salts of amino monomers and methacrylates, such as beta-aminoethylacrylate, beta-aminoethylmethacrylate, dimethylaminomethylacrylate, beta-dimethylaminoethylacrylate, dimethylaminomethylmethacrylate. Hydroxy-containing monomers that are suitable include beta-hydroxyethylacrylate, beta-hydroxypropylacrylate, gamma-hydroxypropylacrylate and beta-hydroxyethylmethacrylate.

Anionic, cationic, nonionic and amphoteric emulsifiers and mixtures thereof known in the art may be used in the practice of this invention.

3

Suitable emulsifiers include polyglycol ethers, sulfonated paraffin hydrocarbons, higher alkyl sulfates such as lauryl sulfate, alkali metal salts of fatty acids such as sodium stearate and sodium oleate, sulfuric acid esters of fatty alcohols, ethoxylated $C_{4-12}$ alkyl phenols and their sulfonation products and also sulfosuccinic acid esters in amounts usually of from 0.1 to 5.0% by weight based on the monomers.

In general, the monomers may be polymerized by conventional aqueous emulsion techniques, preferably at from 45° C to 95° C in the presence of a free radical polymerization initiator, particularly a water-soluble peroxide, e.g., hydrogen peroxide, persulfates such as potassium, sodium and ammonium persulfates or perborates. Other methods known in the art may also be used to polymerize acrylic monomers, such as batch, semi-batch, continuous, or redox techniques.

Preferably all of the water-soluble monomer, from 1% to 50% of the remaining monomer mixture (more preferably from 5% to 25%) and one-half of the polymerization initiator are added in an initial reaction charge, the rest of the remaining monomer mixture is then added continuously over a period from 2 to 4 hours, and the remaining half of the polymerization initiator is added and the reaction continued until polymerization is complete. The continuous addition of any reaction ingredient or ingredients is generally done over a period of from 2 to 4 hours. The inclusion of the conjugated monomer in the initial reactor charge is sufficient for the success of this invention, regardless of the method of addition of the rest of the reaction components.

All parts and percentages used in this specification are by weight unless otherwise indicated.

The following examples are illustrative of this invention.

Example 1

This example illustrates one embodiment of the aqueous polyacrylate dispersions of this invention and how to prepare same.

A reaction vessel equipped with a stirrer, reflux condenser, thermometer, one feed port and a water jacket is charged with 52.35 parts distilled water, 1 part octylphenol ethoxylate having 10 moles of ethylene oxide, 0.15 parts sodium dodecyl benzene sulfonate 0.5 parts potassium sorbate, and 10 parts of a monomer mixture containing, by weight, 42.7 parts butyl acrylate, 56.8 parts methyl methacrylate, and 0.5 parts methacrylic acid. Stirring is continuous throughout the reaction. The temperature of the reactor is raised to 85° C via circulating hot water, 1.0 parts of a 5% aqueous solution of potassium persulfate is added batchwise and the addition of 34 parts of the above monomer mixture is started and continued uniformly over 2.5 hours. After one-half of the total monomer feed has been added, 1.0 parts of a 5% aqueous solution of potassium persulfate is added batchwise. The reaction temperature is maintained at 85° C for 2 hours after the addition of the monomer feed. The reaction mixture is then cooled by circulating cold water.

Example 2

This example illustrates another embodiment of this invention.

The procedure and formulation of Example 1 are used except potassium cinnamate is used instead of potassium sorbate.

Example 3

This example illustrates another embodiment of this invention.

A reaction vessel equipped with a stirrer, reflux condenser, thermometer, one feed port and a water jacket is charged with 42.35 parts distilled water, 1 part octylphenol ethoxylate having 10 moles of ethylene oxide, 0.15 parts sodium dodecyl benzene sulfonate, 0.5 parts potassium sorbate. Stirring is continuous throughout the reaction. The temperature of the reactor is raised to 85° C via circulating hot water. The addition of 1) 4.0 parts of a 5% aqueous solution of potassium persulfate and 8.0 parts distilled water and of 2) 44 parts of a monomer mixture containing, by weight, 42.7 parts butyl acrylate, 56.8 parts methyl methacrylate, and 0.5 parts methacrylic acid, are added in delay fashion using two separate feed streams over 2.5 hours. The rates of addition of the two feed streams are adjusted so that that the addition of the monomer mixture feed stream is completed 10 minutes before the addition of the potassium persulfate and water feed stream. The reaction temperature is maintained at 85° C for 2 hours after the additions are complete. The reaction mixture is then cooled by circulating cold water.

Example 4

This example illustrates the use of aldehydes according to this invention.

The procedure and formulation of Example 1 are used except that 0.35 parts of sorbic aldehyde are used instead of 0.5 parts of potassium sorbate.

Example 5

This example illustrates the use of an ammonium salt of sorbic acid according to this invention.

The procedure and formulation of Example 1 are used except that 0.35 parts of sorbic acid is dispersed into 9.65 parts of water and neutralized with 30% ammonium hydroxide solution to pH = 6.5, thus forming the ammonium salt of sorbic, which is water soluble. This solution replaced 0.5 parts of potassium sorbate and 9.5 parts of distilled water used in Example 1.

Example 6

This example illustrates the use of a 20 carbon containing carboxylic acid (abietic acid) according to this invention.

The procedure and formulation of Example 1 are used except that 0.5 parts of abietic acid and 0.5 parts of Polyrad 1100 (11 moles ethoxylated dehydroabietylamine-Hercules Incorporated) are used in place of 1 part octylphenol ethoxylate having 10 moles of ethylene oxide incorporated therein, 0.15 parts sodium dodecyl benzene sulfonate, and 0.5 parts potassium sorbate. Due to the relatively high molecular weight of abietic acid, both the surfactants can be replaced as well as the potassiuim sorbate by the C-20 water soluble conjugated monomer according to this invention.

Comparative Example 7

This example illustrates the preparation of aqueous polyacrylate dispersions in the presence of a water-insoluble conjugated unsaturated monomer.

The procedure and formulation of Example 1 are used except that sorbic acid is used instead of potassium sorbate.

Comparative Example 8

This example illustrates the preparation of aqueous polyacrylate dispersions in the presence of a water-insoluble conjugated unsaturated monomer.

The procedure and formulation of Example 1 are used except that cinnamic acid is used instead of potassium sorbate. (Cinnamic acid is a monomer used in the process of British Patent Specification 787,703).

Comparative Example 9

This example illustrates the preparation of aqueous polyacrylate dispersions in the absence of a substantially completely water-soluble conjugated unsaturated monomer.

The procedure and formulation of Example 1 are used except that 0.5 parts potassium sorbate is omitted.

Comparative Example 10

5

This example illustrates another preparation of aqueous polyacrylate dispersions in the absence of a substantially completely water-soluble conjugated unsaturated monomer.

The procedure and formulation of Example 3 are used except that 0.5 parts potassium sorbate is omitted.

The properties of the aqueous polyacrylate dispersions of Examples 1-6 and of Comparative Examples 7-10 are set forth below in Table I.

## Table I

| Example | pH | Solids, Wt. % | Viscosity, cps[1] | Particle Size, microns[2] | Shear Stability[3] |
|---|---|---|---|---|---|
| 1 | 6.4 | 44 | 6 | 0.29 | Yes |
| 2 | 6.4 | 38 | 4 | 0.22 | Yes |
| 3 | 5.8 | 46 | 4 | 0.36 | Yes |
| 4 | 3.0 | 46 | 30 | 0.25 | Yes |
| 5 | 5.6 | 46 | 35 | 0.20 | Yes |
| 6 | 6.0 | 46 | 35 | 0.30 | Yes |
| 7 | 2.8 | 46 | 37 | 0.11 | No[4] |
| 8 | 2.8 | 46 | 30 | 0.11 | No[4] |
| 9 | 2.8 | 46 | 32 | 0.12 | No[4] |
| 10 | 2.7 | 48 | 25 | 0.11 | No[4] |

(1) Brookfield LVT viscosity at 25°C before shearing the sample in a Waring blender for 5 minutes at the highest speed.
(2) Coulter Nanosizer particle size reading before shearing the sample in a Waring blender for 5 minutes at the highest speed.
(3) Five minutes in a Waring blender at highest speed.
(4) Five seconds to failure.

Example 11

The example illustrates the use of the polyacrylate latices of this invention in flat latex paint formulations and how to prepare them.

The latex paint is prepared by charging a Cowles disperser with the first 13 ingredients set forth below in Table II and mixing and grinding at high speed for 20 minutes. The remaining 3 ingredients of Table II are then added to the disperser and the mixture is mixed at medium speed for 20 minutes.

## Table II

| Ingredients | Parts by Weight |
|---|---|
| Distilled water | 444.5 |
| Potassium tripolyphosphate | 2.0 |
| Lecithin | 2.0 |
| Aqueous diisobutylene-maleic acid copolymer, Na salt (25% solids) | 5.0 |
| Defoamer 501 hydrophobic surface-modified silica** | 2.0 |
| Ethylene glycol | 20.0 |
| Diethylene glycol monobutyl ether acetate | 10.0 |
| Titanium dioxide, paint grade | 175.0 |
| Calcium carbonate | 150.0 |
| Iceberg clay | 125.0 |
| Silica, 3 microns average particle size; 99.5% $SiO_2$ | 25.0 |
| Nonylphenoxy polyethyleneoxyethanol (10) | 3.0 |
| Hydroxyethyl cellulose having a 2.5 M.S. | 5.5 |
| Bromobenzylacetate | 0.5 |
| Latex of Example 1* | 94.0 |
| Distilled water | 56.0 |

\* Based on 48% solids latex. The amount of wet latex and water added during the let-down stage will vary according to the weight percent latex solids. All latexes are formulated to 45 g dry latex solids.

\*\* Available from Hercules Incorporated.

Examples 12-13 and Comparative Examples 14-17

Examples 12-13 illustrate other embodiments of this invention.

The procedure and formulation of Example 11 are used except that the latices of Examples 2 and 3, and Comparative Examples 7, 8, 9 and 10, respectively, are used in Examples 12-13 and Comparative Examples 14-17 instead of the latex of Example 1.

The properties of the latex formulations of Examples 11-13 and Comparative Examples 14-17 are set forth in Table III below:

EP 0 252 526 B1

Table III

| Example | Abrasion Resistance[1], Cycles to Failure |
|---|---|
| 11 | 80 |
| 12 | 70 |
| 13 | 72 |
| 14 | 50 |
| 15 | 45 |
| 16 | 45 |
| 17 | 49 |

[1]    Represents scrub cycles to failure of 78 PVC flat paint films after 4 days aging formulated with the respective latex according to ASTM D-2486-74a.

Thus this invention provides low viscosity and shear stable acrylic latices having good flow behavior and low grit which can be formulated into latex paints having good abrasion resistance.

Features, advantages and other specific embodiments of this invention will become readily apparent to those exercising ordinary skill in the art after reading the foregoing disclosures. In this regard, while specific embodiments of this invention have been described in considerable detail, variations and modifications of these embodiments can be effected without departing from the scope of the invention as disclosed and claimed.

## Claims

1. A process for preparing an acrylic polymer latex by the aqueous emulsion polymerization of an acrylic or methacrylic ester containing up to 22 carbon atoms, in the absence of a protective colloid and in the presence of a polymerization initiator, characterized in that the polymerization is carried out in the presence of from 0.1% to 2%, by weight of the total monomer, of a water-soluble monomer having conjugated unsaturation which is any monomer comprising two double or triple carbon-carbon bonds connected by one single carbon bond, having a solubility of at least 0.4 gram per 100 ml of water at $20^\circ$ C, and selected from the group consisting of furoic acid, metal salts, amine salts, ammonium salts and quaternary salts of rosin and of $C_5$ to $C_{36}$ carboxylic acids, and water-soluble amine salts, amides, substituted amides, hydroxyalkyl esters, aldehydes, and alcohols of the said monomer having conjugated unsaturation.

2. A process for preparing an acrylic polymer latex as claimed in claim 1, further characterized in that the water-soluble monomer has 5 to 24 carbon atoms.

3. A process for preparing an acrylic polymer latex as claimed in claim 2, further characterized in that the water-soluble monomer has 5 to 18 carbon atoms.

4. A process for preparing an acrylic polymer latex as claimed in claim 1, 2 or 3, further characterized in that the metal for forming the metal salts is sodium, potassium, lithium, magnesium, calcium or zinc.

5. A process for preparing an acrylic polymer latex as claimed in any of the preceeding claims further characterized in that the water-soluble monomer has a solubility of at least 1.0 grams per 100 ml of water at $20^\circ$ C.

6. A process for preparing an acrylic polymer latex as claimed in any of the preceeding claims further characterized in that the water-soluble monomer is selected from the group consisting of the water-

8

soluble amine salts, amides, substituted amides, hydroxyalkyl esters, sulfoalkyl esters, aldehydes, and alcohols of sorbic acid, cinnamic acid, abietic acid, furoic acid, linoleic acid, furylacrylic acid and muconic acid.

7. A process for preparing an acrylic polymer latex as claimed in any of the preceeding claims, further characterized in that the acrylic esters and methacrylic esters are alkyl acrylates or methacrylates in which the alkyl group contains up to 9 carbon atoms.

8. A process for preparing an acrylic polymer latex as claimed in any of the preceeding claims, further characterized in that the acrylic esters and methacrylic esters are copolymerized with one or more other monomers capable of addition polymerization.

9. A process for preparing an acrylic polymer latex as claimed in claim 8, further characterized in that the monomers capable of addition polymerization are selected from the group consisting of unsubstituted and substituted styrene, acrylic or methacrylic acid, vinyl and vinylidene halides, allyl esters of saturated monocarboxylic acids, vinyl esters, vinyl ethers, vinyl ketones, dialkyl esters of monoethylenically unsaturated dicarboxylic acids, amine containing ethylenically unsaturated monomers, ethylenically unsaturated monocarboxylic and polycarboxylic acids and the anhydrides, nitriles, unsubstituted and substituted amides of all said acids.

10. A process for preparing an acrylic polymer latex as claimed in any of the preceeding claims, further characterized in that the monomers capable of addition polymerization are present in an amount from 0.5% to less than 50%, by weight of the total monomer content.

11. A process for preparing an acrylic polymer latex as claimed in claim 10, further characterized in that the monomers capable of addition polymerization are present in an amount not more than 25%, by weight of the total monomer content.

12. A process for preparing an acrylic polymer latex as claimed in claim 11, further characterized in that the monomers capable of addition polymerization are present in an amount from 1% to 10%, by weight of the total monomer content.

13. A process for preparing an acrylic polymer latex as claimed in any of the preceeding claims, further characterized in that the the polymerization is carried out in the presence of 0.1 to 5.0% by weight of the total monomer, of an emulsifier selected from the group consisting of anionic, cationic and nonionic emulsifiers and mixtures thereof.

14. A process for preparing an acrylic polymer latex as claimed in claim 13, further characterized in that all of the water-soluble monomer, from 1% to 50% of the remaining monomer mixture and one-half of the polymerization initiator are added in an initial reaction charge, the rest of the remaining monomer mixture is then added continuously over a period from 2 to 4 hours, and the remaining half of the polymerization initiator is added and the reaction continued until polymerization is complete.

**Revendications**

1. Procédé de préparation d'un latex de polymère acrylique par la polymérisation en émulsion aqueuse d'un ester acrylique ou méthacrylique contenant jusqu'à 22 atomes de carbone, en l'absence de colloïde de protection et en présence d'un initiateur de polymérisation, caractérisé en ce que la polymérisation est conduite en présence de 0,1% à 2% en poids, par rapport aux monomères totaux, d'un monomère hydrosoluble présentant une insaturation conjuguée, c'est-à-dire un monomère quelconque comportant deux liaisons carbone-carbone doubles ou triples reliées par une liaison simple carbone-carbone, ayant une solubilité d'au moins 0,4 g pour 100 ml d'eau à 20 °C et choisi dans le groupe constitué par l'acide furoïque, les sels métalliques, les sels aminés, les sels d'ammonium et les sels quaternaires de colophane et d'acides carboxyliques en $C_6$ à $C_{36}$, et les sels aminés, les amides, les amides substitués, les esters hydroxyalkyliques, les aldéhydes et les alcools hydrosolubles dudit monomère présentant une insaturation conjuguée.

EP 0 252 526 B1

**2.** Procédé de préparation d'un latex de polymère acrylique selon la revendication 1, caractérisé en outre en ce que le monomère hydrosoluble renferme de 5 à 24 atomes de carbone.

**3.** Procédé de préparation d'un latex de polymère acrylique selon la revendication 2, caractérisé en outre en ce que le monomère hydrosoluble renferme de 5 à 18 atomes de carbone.

**4.** Procédé de préparation d'un latex de polymère acrylique selon l'une quelconque des revendications 1 à 3, caractérisé en outre en ce que le métal pour la formation des sels métalliques est le sodium, le potassium, le lithium, le magnésium, le calcium ou le zinc.

**5.** Procédé de préparation d'un latex de polymère acrylique selon l'une quelconque des revendications 1 à 4, caractérisé en outre en ce que le monomère hydrosoluble a une solubilité d'au moins 1,0 g pour 100 ml d'eau à 20° C.

**6.** Procédé de préparation d'un latex de polymère acrylique selon l'une quelconque des revendications 1 à 5, caractérisé en outre en ce que le monomère hydrosoluble est choisi dans le groupe constitué par les sels aminés, amides, amides substitués, esters hydroxyalkyliques, esters sulfoalkyliques, aldéhydes et alcools hydrosolubles d'acide sorbique, d'acide cinnamique, d'acide abiétique, d'acide furoïque, d'acide linoléique, d'acide furylacrylique et d'acide muconique.

**7.** Procédé de préparation d'un latex de polymère acrylique selon l'une quelconque des revendications, caractérisé en outre en ce que les esters acryliques et les esters méthacryliques sont des acrylates ou méthacrylates d'alkyle dans lesquels le groupement alkyle contient jusqu'à 9 atomes de carbone.

**8.** Procédé de préparation d'un latex de polymère acrylique selon l'une quelconque des revendications 1 à 7. caractérisé en outre en ce que les esters acryliques et les esters méthacryliques sont copolymérisés avec un ou plusieurs autres monomères susceptibles de polymérisation par addition.

**9.** Procédé de préparation d'un latex de polymère acrylique selon la revendication 8, caractérisé en outre en ce que les monomères susceptibles de polymérisation par addition sont choisis dans le groupe constitué par le styrène non substitué ou substitué, l'acide acrylique ou méthacrylique, les halogénures de vinyle et de vinylidène, les esters allyliques d'acides monocarboxyliques saturés, les esters vinyliques, les éthers vinyliques, les vinylcétones, les esters dialkyliques d'acides dicarboxyliques insaturés monoéthyléniquement, les monomères insaturés éthyléniquement contenant des amines, les acides monocarboxyliques et polycarboxyliques insaturés éthyléniquement et les anhydrides, nitriles, amides non substitués et substitués de tous ces acides.

**10.** Procédé de préparation d'un latex de polymère acrylique selon l'une quelconque des revendications 1 à 9, caractérisé en outre en ce que les monomères susceptibles de polymérisation par addition sont présents dans une proportion de 0.5% à moins de 50% en poids par rapport à la teneur totale en monomères.

**11.** Procédé de préparation d'un latex de polymère acrylique selon la revendication 10, caractérisé en outre en ce que les monomères susceptibles de polymérisation par addition sont présents dans une proportion non supérieure à 25% en poids par rapport à la teneur totale en monomères.

**12.** Procédé de préparation d'un latex de polymère acrylique selon la revendication 11, caractérisé en outre en ce que les monomères susceptibles de polymérisation par addition sont présents dans une proportion de 1% à 10% en poids par rapport à la teneur totale en monomères.

**13.** Procédé de préparation d'un latex de polymère acrylique selon l'une quelconque des revendications 1 à 12, caractérisé en outre en ce que la polymérisation est conduite en présence de 0,1 à 5,0% en poids, par rapport aux monomères totaux, d'un émulsionnant choisi dans le groupe constitué par des émulsionnants anioniques, cationiques et non ioniques et par des mélanges de ceux-ci.

**14.** Procédé de préparation d'un latex de polymère acrylique selon la revendication 13, caractérisé en outre en ce que la totalité du monomère hydrosoluble, de 1% à 50% du mélange des autres monomères et la moitié de l'initiateur de polymérisation sont introduits en une charge réactionnelle initiale, le reste du

10

mélange des autres monomères est ensuite ajouté de façon continue en une période de 2 à 4 h, la moitié restante de l'initiateur de polymérisation est ajoutée et la réaction est poursuivie jusqu'à ce que la polymérisation soit complète.

## Ansprüche

1. Verfahren zur Herstellung eines Acrylpolymerlatex durch die wässrige Emulsions-Polymerisation eines Acryl- oder Methacrylesters, der bis zu 22 Kohlenstoffatome enthält, in Abwesenheit eines Schutzkolloids und in Anwesenheit eines Polymerisationsinitiators, dadurch gekennzeichnet, daß die Polymerisation durchgeführt wird in Anwesenheit von 0,1 bis 2 Gew.-%, bezogen auf den gesamten Monomergehalt, eines wasserlöslichen Monomers mit konjugierter Ungesättigtheit, wobei es sich um jedes Monomer handeln kann, das zwei Doppel- oder Dreifach-Kohlenstoff-Kohlenstoff-Bindungen verbunden durch eine einfache Kohlenstoff-Bindung aufweist, mit einer Löslichkeit von wenigstens 0,4 Gramm pro 100 ml Wasser bei 20°C und das ausgewählt ist aus der Gruppe bestehend aus Furancarbonsäure, Metallsalzen, Aminsalzen, Ammoniumsalzen und quaternären Salzen von Harz und C$_5$-bis C$_{36}$-Carbonsäuren und wasserlöslichen Aminsalzen, Amiden, substituierten Amiden, Hydroxyalkylestern, Aldehyden und Alkoholen dieses Monomers mit konjugierter Ungesättigtheit.

2. Verfahren zur Herstellung eines Acrylpolymerlatex nach Anspruch 1, weiter dadurch gekennzeichnet, daß das wasserlösliche Monomer 5 bis 24 Kohlenstoffatome aufweist.

3. Verfahren zur Herstellung eines Acrylpolymerlatex nach Anspruch 2, weiter dadurch gekennzeichnet, daß das wasserlösliche Monomer 5 bis 18 Kohlenstoffatome aufweist.

4. Verfahren zur Herstellung eines Acrylpolymerlatex nach Anspruch 1, 2 oder 3, weiter dadurch gekennzeichnet, daß das Metall zum Bilden des Metallsalzes Natrium, Kalium, Lithium, Magnesium, Kalzium oder Zink ist.

5. Verfahren zur Herstellung eines Acrylpolymerlatex nach einem der vorhergehenden Ansprüche, weiter dadurch gekennzeichnet, daß das wasserlösliche Monomer eine Löslichkeit von wenigstens 1,0 Gramm pro 100 ml Wasser bei 20°C aufweist.

6. Verfahren zur Herstellung eines Acrylpolymerlatex nach einem der vorhergehenden Ansprüche, weiter dadurch gekennzeichnet, daß das wasserlösliche Monomer ausgewählt ist aus der Gruppe bestehend aus wasserlöslichen Aminsalzen, Amiden, substituierten Amiden, Hydroxyalkylestern, Sulfoalkylestern, Aldehyden und Alkoholen von Sorbinsäure, Zimtsäure, Abietinsäure, Furancarbonsäure, Linolsäure, Furylacrylsäure und Muconsäure.

7. Verfahren zur Herstellung eines Acrylpolymerlatex nach einem der vorhergehenden Ansprüche, weiter dadurch gekennzeichnet, daß die Acrylester und Methacrylester Alkylacrylate oder methyacrylate sind, worin die Alkylgruppe bis zu 9 Kohlenstoffatome enthält.

8. Verfahren zur Herstellung eines Acrylpolymerlatex nach einem der vorhergehenden Ansprüche, weiter dadurch gekennzeichnet, daß die Acrylester und Methacrylester mit einem oder mehreren anderen Monomeren, die zu Additionspolymerisation fähig sind, copolymerisiert werden.

9. Verfahren zur Herstellung eines Acrylpolymerlatex nach Anspruch 8, weiter dadurch gekennzeichnet, daß die Monomere, die zu Additionspolymerisation fähig sind, ausgewählt sind aus der Gruppe bestehend aus nicht-substituiertem und substituiertem Styrol, Acryl- oder Methacrylsäure, Vinyl- und Vinylidenhaliden, Allylestern von gesättigten Monocarbonsäuren, Vinylestern, Vinylethern, Vinylketonen, Dialkylestern von monoethylenartig-ungesättigten Dicarbonsäuren, Amin, enthaltend ethylenartig-ungesättigte Monomere, ethylenartig-ungesättigte Monocarbon- und Polycarbonsäuren und den Anhydriden, Nitrilen, nicht-substituierten und substituierten Amiden von all diesen Säuren.

10. Verfahren zur Herstellung eines Acrylpolymerlatex nach einem der vorhergehenden Ansprüche, weiter dadurch gekennzeichnet, daß die Monomere, die zu Additionspolymerisation fähig sind, in einer Menge von 0,5 bis weniger als 50 Gew.-%, bezogen auf den gesamten Monomergehalt, anwesend sind.

**11.** Verfahren zur Herstellung eines Acrylpolymerlatex nach Anspruch 10, weiter dadurch gekennzeichnet, daß die Monomere, die zu Additionspolymerisation fähig sind, in einer Menge von nicht mehr als 25 Gew.-%, bezogen auf den gesamten Monomergehalt, anwesend sind.

**12.** Verfahren zur Herstellung eines Acrylpolymerlatex nach Anspruch 11, weiter dadurch gekennzeichnet, daß die Monomere, die zu Additionspolymerisation fähig sind, in einer Menge von 1 bis 10 Gew.-%, bezogen auf den gesamten Monomergehalt, anwesend sind.

**13.** Verfahren zur Herstellung eines Acrylpolymerlatex nach einem der vorhergehenden Ansprüche, weiter dadurch gekennzeichnet, daß die Polymerisation in Anwesenheit von 0,1 bis 5.0 Gew.-%, bezogen auf den gesamten Monomergehalt, eines Emulgators, ausgewählt aus der Gruppe bestehend aus anionischen, kationischen und nichtionischen Emulgatoren und Mischungen davon durchgeführt wird.

**14.** Verfahren zur Herstellung eines Acrylpolymerlatex nach Anspruch 13, weiter dadurch gekennzeichnet, daß das ganze wasserlösliche Monomer, von 1 bis 50% der verbleibenden Monomermischung und eine Hälfte des Polymerisationsinitiators in einer ersten Reaktionsbeschickung zugefügt werden, der Rest der verbleibenden Monomermischung dann fortlaufend während einer Dauer von 2 bis 4 Stunden zugefügt und die verbleibende Hälfte des Polymerisationsinitiators zugefügt wird und die Reaktion fortgesetzt wird, bis die Polymerisation vollständig ist.